(19)

Europäisches Patentamt
European Patent Office
Office européen des brevets

(11) EP 4 707 793 A1

(12) EUROPEAN PATENT APPLICATION

(43) Date of publication:
11.03.2026 Bulletin 2026/11

(21) Application number: 24198336.0

(22) Date of filing: 04.09.2024

(51) International Patent Classification (IPC):
G01N 29/04 (2006.01)    G01N 3/00 (2006.01)
G01N 29/11 (2006.01)    G01N 29/24 (2006.01)

(52) Cooperative Patent Classification (CPC):
G01N 29/2418; G01N 3/00; G01N 29/043;
G01N 29/11; G01N 2291/0258; G01N 2291/02827

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: SSAB Technology AB
101 21 Stockholm (SE)

(72) Inventors:
• Malmström, Mikael
164 07 Kista (SE)
• Jansson, Anton
164 07 Kista (SE)
• Bäcke, Linda
781 84 Borlänge (SE)

(74) Representative: AWA Sweden AB
Box 5117
200 71 Malmö (SE)

(54) **A METHOD FOR ESTIMATING AN ACCUMULATED STRAIN OF AN OBJECT**

(57) The present invention relates to a method for estimating an accumulated strain of an object by means of a laser ultrasonic (LUS) measurement equipment comprising a generation laser, a detection laser and a detector.

The method comprises:
- providing a laser pulse onto a surface of the object by the generation laser such that a plurality of ultrasonic waves is created in the object,
- detecting the plurality of ultrasonic wave-echoes by use of the detection laser and the detector, and therefrom obtaining a time-varying signal relating to an amplitude variation of the plurality of ultrasonic wave-echoes in a time domain,
- estimating the accumulated strain of the object by use of the time-varying signal.

Fig. 3

**Description**

TECHNICAL FIELD

The present disclosure relates to a method for estimating an accumulated strain of an object by means of a laser ultrasonic (LUS) measurement equipment comprising a generation laser, a detection laser and a detector. Moreover, the present disclosure relates to a method for determining a recrystallized fraction of an object which has been subjected to a rolling operation. The present disclosure further relates to a method for controlling a steel rolling process, an arrangement for measuring an accumulated strain of an object, a computer program and/or a computer readable medium carrying a computer program.

BACKGROUND

Accumulated strain generally refers to the total amount of consistent deformation that a material undergoes due to external forces or loads over time. Estimating accumulated strain may be particularly vital in industries like steel production, where material is deformed during the production process. For example, in hot rolling processes for producing steel strips, heated slabs of steel passes between rolls to reduce the thickness. This process induces plastic deformation and significant microstructural changes, ultimately resulting in an elongated steel strip with desired thickness and microstructure. Estimating the accumulated strain and the microstructural changes in the material's internal structure may allow for the prediction of material properties that are closely related to it.
Therefore, it would be beneficial to measure and estimate the accumulated strain of an object during, for instance, the hot rolling process for producing steel strips, which may enable optimization of material models and the process, contributing to an increased capacity utilization and ensuring desired material properties and product performance.

SUMMARY

In view of the above, an object of the present invention is to provide an improved method and arrangement for estimating an accumulated strain of an object. Another object of the present invention is to provide an improved method and arrangement for determining a recrystallized fraction of an object. Further, an object of the present invention is to provide improved control of a steel rolling process by performing *in-situ* measurements of an accumulated strain during the steel rolling process.
According to a first aspect, the object is achieved by a method for estimating the accumulated strain of an object as defined in claim 1. According to a second aspect, the object is achieved by a method for determining a recrystallized fraction of an object as defined in claim 15. According to a third aspect, the object is achieved by a method for controlling a steel rolling process as defined in claim 16. According to a fourth aspect, the object is achieved by an arrangement as defined in claim 17. According to a fifth aspect, the object is achieved by a steel rolling mill as defined in claim 20. According to a sixth aspect, the object is achieved by a computer program as defined in claim 21. According to a seventh aspect, the object is achieved by a computer readable medium carrying a computer program as defined in claim 22. Further embodiments of the disclosure may be found in the dependent claims and in the accompanying description and drawings.
According to the first aspect thereof, the object is achieved by a method for estimating an accumulated strain of an object by means of a laser ultrasonic (LUS) measurement equipment comprising a generation laser, a detection laser and a detector.
The method comprises:

- providing a laser pulse onto a surface of the object by the generation laser such that a plurality of ultrasonic waves is created in the object,
- detecting the plurality of ultrasonic wave-echoes by use of the detection laser and the detector, and therefrom obtaining a time-varying signal relating to an amplitude variation of the plurality of ultrasonic wave-echoes in a time domain,
- estimating the accumulated strain of the object by use of the time-varying signal.

By the provision of the method according to the first aspect of the invention, the accumulated strain may be estimated and determined in an improved manner. This is achieved through the utilization of LUS measurement, specifically through use of the time-varying signal from the LUS measurement, which may allow for efficient estimation without e.g. the need to convert the time-varying signal into a frequency-varying signal. This may reduce computational complexity and potential errors associated with, for instance, Fourier transforms or other frequency domain techniques.
Herein, the term 'time-varying signal' refers to an amplitude variation of the ultrasonic wave echoes within the object over time. Generally, when a laser pulse is applied onto the surface, a plurality of ultrasonic waves is generated and may travel through or along the object's surface. These pulses can be detected as a series of ultrasonic wave echoes and be plotted in a time domain graph.

Optionally, the method further comprises:

- from the time-varying signal, detecting at least one shear wave packet echo in the plurality of ultrasonic wave-echoes, and
- estimating the accumulated strain of the object by use of the at least one shear wave packet echo.

Optionally, detecting the at least one shear wave packet echo comprises detecting whether at least one shear wave packet echo is split into a first wave-echo having a first peak and a second wave-echo having a second peak, and when the first and second wave-echoes are detected,

- estimating the accumulated strain of the object by use of the first and second wave-echoes.

Herein, a wave packet may be understood as a packet that contains several waves at the same time or, directly after one another. As mentioned above, when a laser pulse is applied onto the surface, a plurality of ultrasonic waves is generated and may travel through or along the object's surface. Shear waves herein may be understood as waves with polarizations in a direction that is perpendicular to their direction of propagation. The inventors have realized that the shear wave packet echoes sometimes split into two echoes due to acoustic birefringence, a phenomenon closely correlated with the object's accumulated strain. Thus, by use of the information present in the time varying signal, it may be possible to estimate the accumulated strain. Consequently, the estimation may be performed in an efficient manner, eliminating the need for more complex data or data processing.

Optionally, the method further comprises:

- detecting a temporal separation between the first peak of the first wave-echo and the second peak of the second wave-echo, and
- estimating the accumulated strain of the object by use of the temporal separation.

It has further been realized that the temporal separation between the first wave-echo and the second wave-echo within the wave packet is in close relation with a level of the accumulated strain. Therefore, it may be possible to estimate the accumulated strain by analysing the temporal separation between the first and second wave-echoes within the shear wave packet.

Optionally, the estimation is based on an assumption that a level of the accumulated strain is proportional to a degree of the temporal separation between the first peak and the second peak.

Optionally, the method further comprises:

- from the time-varying signal, detecting at least one longitudinal wave-echo in the plurality of ultrasonic wave-echoes,
- estimating the accumulated strain of the object by use of the at least one shear wave packet echo and the at least one longitudinal wave-echo.

Longitudinal waves herein may be understood as waves which are polarized in the same direction as the waves propagate. It has been further realized that by use of the at least one shear wave-echo and the at least one longitudinal wave-echo, it may be possible to normalize the temporal separation between the peak of the first wave-echo and the peak of the second wave-echo within the wave packet. In this way, the accumulated strain may be estimated in a more accurate manner.

Optionally, the object has a first extension along a normal direction, a second extension along a length direction and a third extension along a transverse direction, the normal direction, the length direction and the transverse direction being perpendicular to each other. The, at least one, shear wave is propagating in the normal direction of the object and have polarizations in the length direction and the transverse direction. The method further comprises:

- estimating the accumulated strain by use of the at least one shear wave having the polarizations in the length direction and the transverse direction.

Herein, the normal direction may correspond to a thickness direction of the object, which is perpendicular to the surface onto which the laser pulse is provided. The transverse direction may refer to a width direction of the object and the length direction may be perpendicular to both the normal and transverse directions. When the plurality of ultrasonic pulses is generated, the shear waves may propagate along the normal direction and be polarized in the length direction and the transverse direction. Accordingly, the first wave-echo may correspond to the shear wave polarized in the length direction, while the second wave-echo may correspond to the shear wave polarized in the transverse direction. Consequently, by using the shear waves having the polarizations in the length direction and the transverse direction, it may be possible to analyse the temporal separation between the first peak of the first wave-echo and the second peak of the second wave-echo and thereby to estimate the accumulated strain in a more accurate manner.

Optionally, the method further comprises:

- detecting at least one shear wave-echo having the polarization in the length direction and determining a first Poisson's ratio by use of the detected at least one shear wave-echo and the at least one longitudinal wave-echo,
- detecting at least one shear wave-echo having the polarization in the transverse direction and determining a second Poisson's ratio by use of the detected at least one shear wave-echo and the at least one longitudinal wave-echo, and
- estimating the accumulated strain based on the first and second Poisson's ratios.

It has further been realized that it may be possible to normalize the temporal separation by determining a Poisson's ratio of the shear wave-echo having the polarization in the length direction and the shear wave-echo having the polarization in the transverse direction.

Optionally, the estimation is based on an assumption that a level of accumulated strain is proportional to a difference between the first and the second Poisson's ratios.

Optionally, the laser pulse is provided with a predetermined power level by the generation laser, such that the plurality of ultrasonic wave-echoes is created by the ultrasonic pulse. The predetermined power level may correspond to a power level such that a sufficient number of ultrasonic wave-echoes is measurable for estimating the accumulated strain estimation. Purely by way of example, the power level may be in a range from 60 mJ to 200 mJ, preferably 70-200 mJ, and most preferably 80-150 mJ.

Optionally, less than four echoes, from a first used echo to a last used echo, are used for estimating the accumulated strain. By using a relatively limited number of echoes, it may reduce the time and complexity required for signal processing and analysis, resulting in an improved efficiency for estimating the accumulated strain.

Optionally, the object is a metallic object, preferably a steel alloy.

Optionally, laser beams of the generation laser and the detection laser are directed towards the same location on the surface of the object.

Optionally, the generation laser and the detection laser are configured to provide different laser beam wavelengths.

According to the second aspect thereof, the object is achieved by a method for determining a recrystallized fraction of an object which has been subjected to a rolling operation. The method comprises:

- estimating an accumulated strain of the object by use of the method according to any one of the embodiments of the first aspect,
- determining a rolling reduction of the object, and
- determining the recrystallized fraction based on the rolling reduction and the estimated accumulated strain.

The rolling reduction herein may be understood as an engineering strain of the object. Generally, a completely recrystallized material may have accumulated strain close to zero, whereas a material which has not recrystallized may have accumulated strain equal to the rolling reduction. As such, it may be possible to determine the recrystallized fraction based on the above two parameters, using the method according to any one of the embodiments of the first aspect of the invention. Therefore, advantages and effects provided by the second aspect are largely analogous to the advantages and effects provided by the method according to the embodiments of the first aspect. It shall also be noted that all embodiments of the second aspect are applicable to and combinable with all embodiments of the first aspect and vice versa.

According to the third aspect thereof, the object is achieved a method for controlling a steel rolling process. The method comprises:

- performing *in-situ* measurements of an accumulated strain and/or a recrystallized fraction of a steel object during the steel rolling process by use of the method according to any one of the embodiments of the first aspect and/or the second aspect, and
- controlling the steel rolling process based on the accumulated strain and/or the recrystallized fraction.

Advantages and effects provided by the third aspect are largely analogous to the advantages and effects provided by the method according to the embodiments of the first aspect and/or the second aspect of the invention. It shall also be noted that all embodiments of the third aspect are applicable to and combinable with all embodiments of the first and/or the second aspect of the invention and vice versa.

It has been realized that improved control of the steel rolling process may be provided by using the method according to the first aspect and/or the second aspect as disclosed herein. More particularly, the accumulated strain and/or the recrystallized fraction of the steel estimated during the steel rolling process may be used as feedback information and/or as feed forward information for controlling the process more efficiently and/or for improving the quality of the steel such that it reaches a desired average microstructure. The steel rolling process is preferably a hot rolling process. The estimated accumulated strain and/or the recrystallized fraction may e.g. be used for controlling the load distributed by the rolls in the hot rolling mill and the speed of the rolling process etc. Further, the accumulated strain and/ or recrystallized fraction the of the steel estimated during the steel rolling process enables optimization of the rolling parameters such as temperature and may be used as a complement or as an alternative to using temperature as a control parameter for the process. Still further, the estimated accumulated strain may e.g. be used for controlling the subsequent water cooling in the steel rolling process.

According to the fourth aspect thereof, the object is achieved by an arrangement for measuring an accumulated strain and/or a recrystallized fraction of an object, comprising:

- a laser ultrasonic (LUS) measurement equipment comprising a generation laser, a detection laser and a detector, and
- a control unit configured to perform the steps of the method according to any one of the embodiments of the first aspect and/or the second aspect.

Advantages and effects provided by the fourth aspect are largely analogous to the advantages and effects provided by the method according to the embodiments of the first second and third aspects. It shall also be noted that all embodiments of the fourth aspect are applicable to and combinable with all embodiments of the first, second and third aspects and vice versa.

Optionally, laser beams of the generation laser and the detection laser may be directed towards the same location on the surface of the object, "Same location" may herein mean that the laser beams are provided a distance from each other on the surface which is 1 mm (millimetre) or less. In other words, the generation and the detection may preferably overlap on the surface. Still optionally, a direction of the laser beam of the generation laser and a direction of the laser beam of the detection laser may be angularly separated relative each other. By providing the generation laser and the detection laser with an angular separation with respect to each other, the measurement may be further improved since the generation laser thereby may cause less disturbance to the detector, which in one embodiment may be an interferometer. It shall however be noted that the method as disclosed herein may also be used by a generation laser and detection laser which laser beams are aligned, i.e. co-axial.

Optionally, the generation laser and the detection laser are configured to provide different laser beam wavelengths.

According to the fifth aspect thereof, the object is achieved by a steel rolling mill comprising the arrangement according to any one of the embodiments of the fourth aspect of the invention. The steel rolling mill is preferably a steel hot rolling mill.

Advantages and effects provided by the fifth aspect are largely analogous to the advantages and effects provided by the method according to the embodiments of the first, second and third aspects. It shall also be noted that all embodiments of the fourth aspect are applicable to and combinable with all embodiments of the first, second and third aspects and vice versa.

According to the sixth aspect thereof, the object is achieved by a computer program comprising program code means for performing the steps of any of the embodiments of the first, second and third aspects of the invention, when said program is run on a control unit. According to the seventh aspect thereof, the object is achieved by a computer readable medium carrying a computer program comprising program code means for performing the steps of any of the embodiments of the first, second and third aspects of the invention, when said program product is run on a control unit.

BRIEF DESCRIPTION OF THE DRAWINGS

With reference to the appended drawings, below follows a more detailed description of embodiments of the disclosure cited as examples.

In the drawings:

Fig. 1 shows a flowchart of a method according to an example embodiment of the first aspect of the invention;

Fig. 2 shows another flowchart of a method according to an example embodiment of the first aspect of the invention;

Fig. 3 shows a graph of a measured amplitude of ultrasonic wave echoes in the time domain according to an example embodiment of the present invention;

Fig. 4 shows an enlarged graph of a shear wave-echo;

Fig. 5 shows an illustration of a plurality of waves propagating inside an object;

Fig. 6 shows a plot of experimental data of the difference between the first and second Poisson's ratios against values of the accumulated strain;

Fig. 7 shows a plot of measured values of shear wave birefringence against the accumulated strain;

Fig. 8a shows a flowchart of a method according to an example embodiment of the second aspect of the invention;

Fig. 8b shows a principle for extracting the accumulated strain used for estimation of the recrystallized fraction;

Fig. 9 shows a flowchart of a method according to an example embodiment of the third aspect of the invention;

Fig. 10 shows an example embodiment of a steel rolling mill and an arrangement according to an example embodiment of the third aspect of the invention; and

Fig. 11 shows an example embodiment of an arrangement with a LUS measurement equipment according to an example embodiment of the present invention.

The drawings show diagrammatic exemplifying embodiments of the present disclosure and are thus not necessarily drawn to scale. It shall be understood that the embodiments shown and described are exemplifying and that the invention is not limited to these embodiments. It shall also be noted that some details in the drawings may be exaggerated in order to better describe and illustrate the particular embodiment. Like reference characters refer to like elements throughout the description, unless expressed otherwise.

DETAILED DESCRIPTION OF PREFERRED EMBODIMENTS

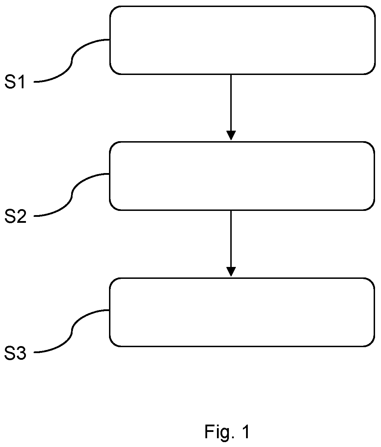

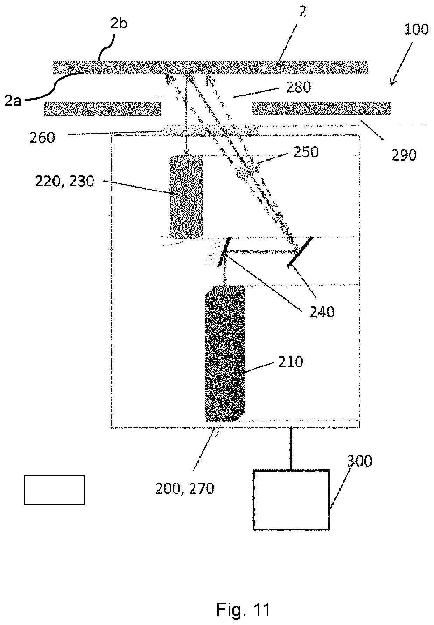

Fig. 1 depicts a flowchart of a method for estimating accumulated strain of an object 2 by means of a laser ultrasonic (LUS) measurement equipment 200 such as shown in fig. 11. The laser ultrasonic (LUS) measurement equipment 200 comprises a generation laser 210, a detection laser 220 and a detector 230. The method comprises the actions listed in the following:

S1: providing a laser pulse onto a surface of the object by the generation laser 210 such that a plurality of ultrasonic waves is created in the object,

S2: detecting the plurality of ultrasonic wave-echoes by use of the detection laser 220 and the detector 230, and therefrom obtaining a time-varying signal relating to an amplitude variation of the plurality of ultrasonic wave-echoes in a time domain, and

S3: estimating the accumulated strain of the object by use of the time-varying signal.

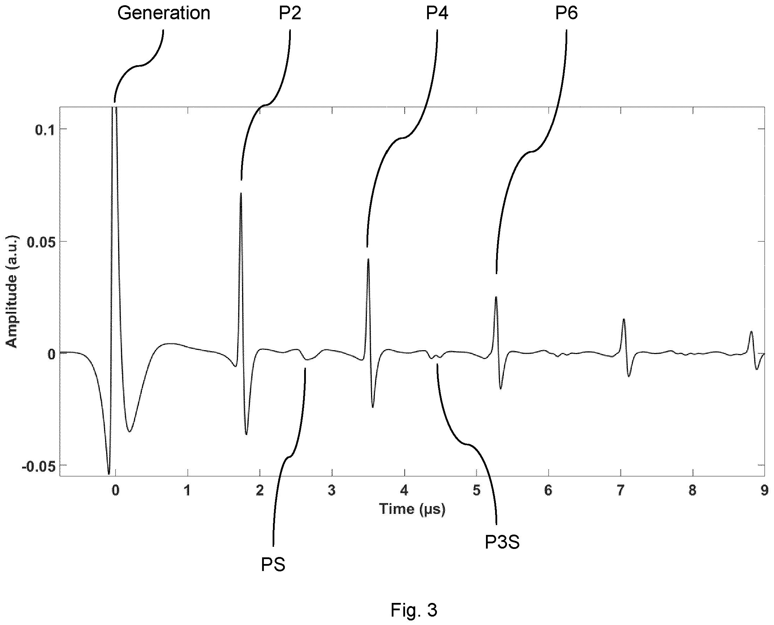

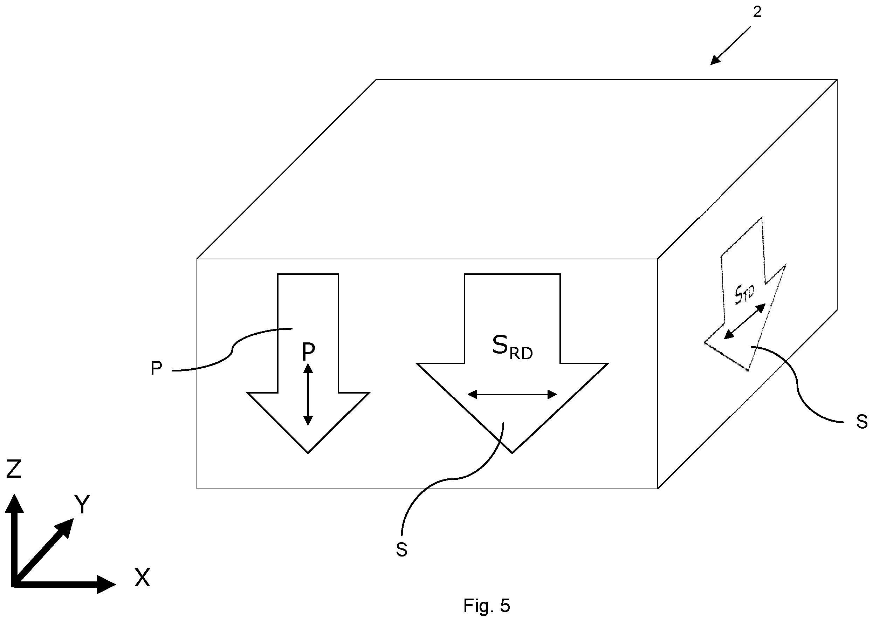

Fig. 3 shows an example of a measurement performed by use of a detector 230 of a LUS measurement equipment 200 after a laser pulse has been provided onto a surface of a steel object 2. In particular, Fig. 3 depicts a plot of a measured amplitude of ultrasonic wave echoes in the time domain, which may be obtained from a time-varying signal relating to an amplitude variation of the plurality of ultrasonic wave-echoes. The vertical axis defines amplitude of the wave displacement, and the horizontal axis is time in $\mu$s. When a laser pulse is provided onto a surface of an object 2, a plurality of ultrasonic waves may be generated inside the object 2 and propagate in the thickness direction of the object 2. Fig. 5 shows an explanatory perspective view of propagation and polarization of a plurality of ultrasonic waves inside an object 2. As shown in figure 5, the object 2 has a first extension along a normal direction ND, which may correspond to a thickness direction of the objection 2, a second extension along a length direction LD and a third extension along a transverse direction TD. When the object 2 is subjected to a rolling operation, the length direction may correspond to a rolling direction RD of the object 2. The plurality of ultrasonic waves comprises a longitudinal wave P, often referred to as the main wave or P wave, which is polarized in the same direction as it propagates. Moreover, the plurality of ultrasonic waves further comprises shear waves S, which are polarized in a direction that is perpendicular to the propagation direction, such as in the rolling direction RD, or in the transverse direction TD.

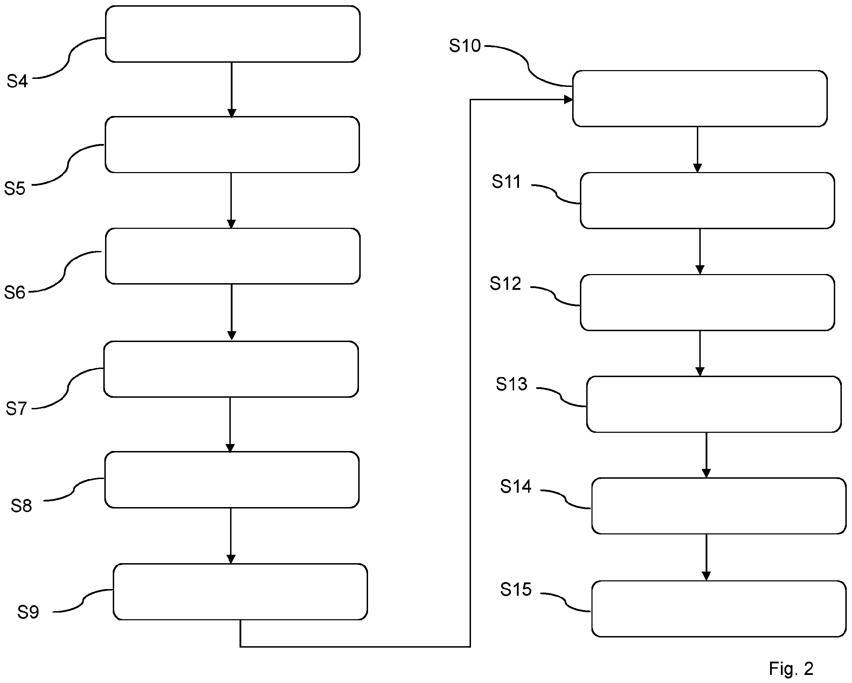

It has been realized by the inventors that the one shear wave packet echo sometimes split into two echoes, which is closely correlated to the object's accumulated strain. Therefore, the method may preferably further comprise, e.g. with reference to Fig. 2:

> from the time-varying signal, S4: detecting at least one shear wave packet echo in the plurality of ultrasonic wave-echoes,
>
> S5: estimating the accumulated strain of the object by use of the at least one shear wave packet echo,
>
> S6: detecting whether the at least one shear wave packet echo is split into a first wave-echo having a first peak and a second wave-echo having a second peak, and when the first and second wave-echoes are detected,
>
> S7: estimating the accumulated strain of the object by use of the first and second wave-echoes.

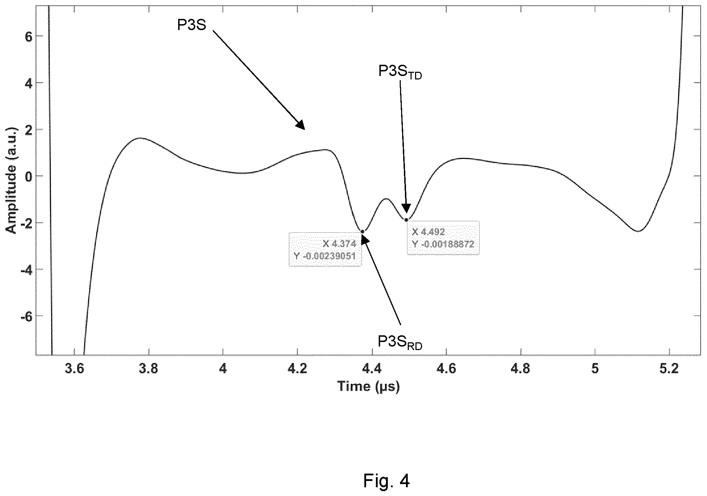

Turning back to the Fig.3 example, the graph shows amplitude information of the plurality of ultrasonic wave-echoes including longitudinal wave-echoes P2, P4, P6 and shear wave-echoes PS, P3S, where amplitudes for the shear wave-echoes PS, P3S, are generally much smaller than those of the longitudinal wave-echoes P2, P4, P6. In the shown example, the third shear wave packet echo P3S has split into two wave-echoes $P3S_{RD}$, $P3S_{TD}$. The first wave echo $P3S_{RD}$ has a first peak and the second wave echo $P3S_{TD}$ has a second peak, respectively. This can be visualized by an enlarged figure as shown in Fig. 4. As mentioned before, when the plurality of ultrasonic pulses is generated, the shear waves may travel along the normal direction and polarized in the length direction LD, such as a rolling direction RD when the object 2 is subjected to a rolling operation, and the transverse direction TD. Accordingly, the first wave-echo $P3S_{RD}$ may correspond to the shear wave polarized in the rolling direction, while the second wave-echo $P3S_{TD}$ may correspond to the shear wave polarized in the transverse direction.

The inventors have further realized that the temporal separation between the first wave-echo $P3S_{RD}$ and the second wave-echo $P3S_{TD}$ is in close relation with a level of the accumulated strain. Thus, the method may preferably further comprise:

> S8: detecting a temporal separation between the first peak of the first wave-echo $P3S_{RD}$ and the second peak of the second wave-echo $P3S_{TD}$, and
>
> S9: estimating the accumulated strain of the object by use of the temporal separation.

The estimation is based on an assumption that a level of accumulated strain is proportional to a degree of the temporal separation between the first peak and the second peak, i.e., the birefringence B.

Preferably, the temporal separation between the first peak and the second peak can be normalized to evaluate the accumulated strain. Thus, the method may further comprise:

> S10: from the time-varying signal, detecting at least one longitudinal wave-echo P2, P4, P6 in the plurality of ultrasonic wave-echoes, and
>
> S11: estimating the accumulated strain of the object 2 by use of the at least one shear wave packet echo P3S and the at least one longitudinal wave-echo P2, P4, P6, and preferably:
>
> S12: estimating the accumulated strain by use of shear wave $P3S_{RD}$, $P3S_{TD}$ having the polarizations in the length direction, or a rolling direction when the object is subjected to a rolling operation, and the transverse direction TD.

Moreover, the method may further comprise:

> S13: detecting at least one shear wave-echo $P3S_{RD}$ having the polarization in the length direction LD and determining a first Poisson's ratio $v_{LD}$ by use of the detected at least one shear wave-echo $P3S_{RD}$ and the at least one longitudinal wave-echo P2, P4, P6
>
> S14: detecting at least one shear wave-echo $P3S_{TD}$ having the polarization in the transverse direction TD and determining a second Poisson's ratio $v_{TD}$ by use of the detected at least one shear wave-echo $P3S_{TD}$ and the at least one longitudinal wave-echo P2, P4, P6, and
>
> S15: estimating the accumulated strain based on the first and second Poisson's ratios $v_{LD}, v_{TD}$.

Purely by way of example, the first Poisson's ratio $v_{RD}$ may be calculated using a ratio $r_{RD}$ of the time of flight (ToF) of the shear wave $P3S_{RD}$ having the polarization in the length direction LD, e.g., a rolling direction when the object is subjected to a rolling operation, and the longitudinal wave, as shown in the following formula:

$$r_{RD} = \frac{V_P}{V_{SRD}} = \frac{ToF_{SRD}}{ToF_P} \tag{1}$$

$$v_{RD} = \frac{r_{RD}^2 - 2}{2(r_{RD}^2 - 1)} \tag{2}$$

Herein, Vp is the velocity of the longitudinal wave, and $V_{SRD}$ is the velocity of the shear wave polarized in the length direction of the object, e.g., a rolling direction RD when the object is subjected to a rolling operation. Moreover, $ToF_{SRD}$ refers to the ToF for one skip of the shear wave $S_{RD}$ having the polarization in the rolling direction, and $ToF_P$ refers to the ToF of one skip of the longitudinal wave. It shall be noted that one skip refers to one time a wave travels through the thickness of the object 2.

Similarly, the second Poisson's ratio $v_{TD}$ may be calculated using a ratio $r_{TD}$ of the time of flight (ToF) of one skip of the shear wave $S_{TD}$ having the polarization in the transverse direction TD and one skip of the longitudinal wave, as shown in the following formula:

$$r_{TD} = \frac{V_P}{V_{STD}} = \frac{ToF_{STD}}{ToF_P} \tag{3}$$

$$v_{TD} = \frac{r_{TD}^2 - 2}{2(r_{TD}^2 - 1)} \tag{4}$$

Herein, $V_p$ is the velocity of the longitudinal wave, while $V_{STD}$ is the velocity of the shear wave polarized in the transverse direction TD. Moreover, $ToF_{STD}$ refers to the ToF of one skip of the shear wave $S_{TD}$ having the polarization in the transverse direction TD, and $ToF_P$ refers to the ToF of one skip of the longitudinal wave P.

Purely by way of example, the time of flight for each one of the waves may be calculated by:

$$ToF_P = \frac{ToF_{Pn} - t_0}{n} \tag{5}$$

$$ToF_{Sii} = (ToF_{P(n-1)Sii} - t_0) - (n-1)ToF_P = ToF_{P(n-1)Sii} - \frac{ToF_{Pn-2} + ToF_{Pn}}{2} \tag{6}$$

Where n is the number of skips of the wave for a particular echo, $t_0$ is the time of the generation event, and *ii* is either rolling direction RD or transversal direction TD.

The estimation is based on an assumption that a level of accumulated strain is proportional to a difference between the first and the second Poisson's ratios $v_{RD}, v_{TD}$.

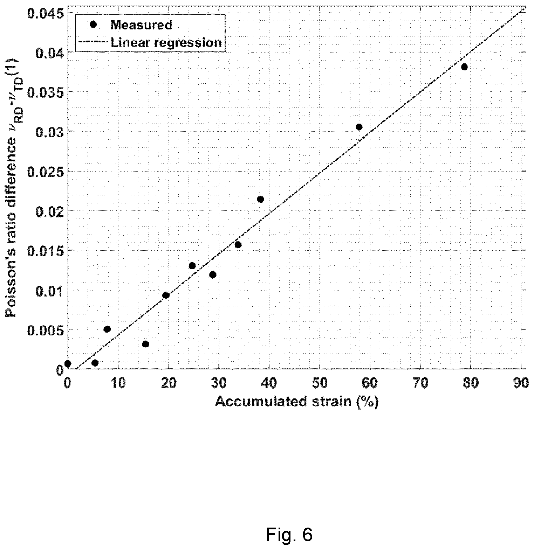

Fig. 6 is an example plot of measured values of the difference between the first and second Poisson's ratios $v_{RD}, v_{TD}$ against the accumulated strain, which shows that the difference between the first and the second Poisson's ratios $v_{RD}, v_{TD}$ is proportional to the level of accumulated strain.

As another non-limiting example, the temporal separation between the first peak of the first wave-echo and the second peak of the second wave-echo may be normalized by calculating a birefringence B value for the shear wave that has been detected:

$$B = \frac{V_{SRD} - V_{STD}}{(V_{SRD} + V_{STD})/2} = \frac{ToF_{STD} - ToF_{SRD}}{(ToF_{STD} + ToF_{SRD})/2} \tag{7}$$

Herein, $V_{SRD}$ is the velocity of the shear wave polarized in the rolling direction RD when the object is subjected to a rolling operation, while $V_{STD}$ is the velocity of the shear wave polarized in the transverse direction TD. Moreover, $ToF_{STD}$ refers to the ToF for one skip of the shear wave having the polarization in the transverse direction TD, and $ToF_{SRD}$ refers to the ToF for one skip of the shear wave having the polarization in the rolling direction RD.

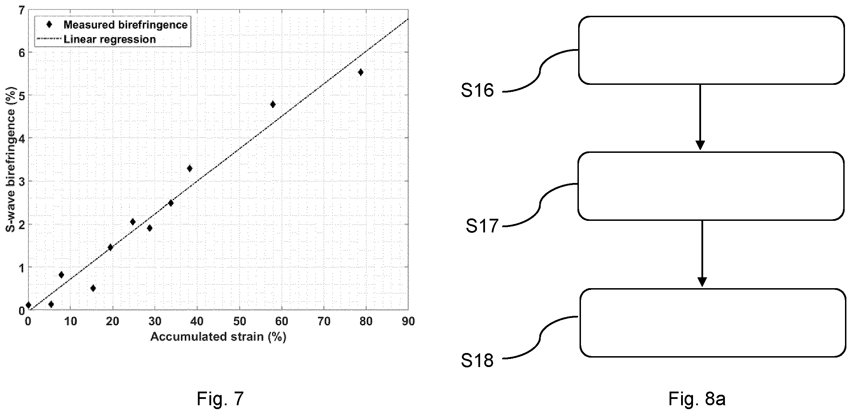

Fig. 7 shows a plot of measured values of shear wave birefringence B against the accumulated strain, which shows that the level of accumulated strain correlates to the birefringence *B*.

In some examples, the laser pulse is provided with a predetermined power level by the generation laser, such that the plurality of ultrasonic wave-echoes is created by the ultrasonic pulse. Purely by way of examples, less than four echoes, from a first used echo to a last used echo, are used for estimating the accumulated strain.

In some examples, the object 2 is a metallic object, preferably a steel alloy.

The present invention also relates to a method for determining a recrystallized fraction of an object 2 which has been subjected to a rolling or deformation operation. The method comprises the step as shown in Fig. 8a:

S16: estimating the accumulated strain of the object by use of the method according to any one of embodiments of the first aspect of the invention,

S17: determining a rolling reduction of the object, and

S18: determining the recrystallized fraction based on the rolling reduction and the estimated accumulated strain.

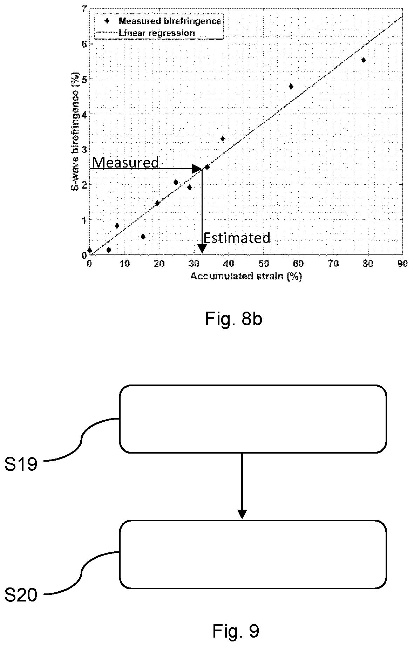

Fig. 8b shows a plot of calculation of recrystallized fraction (RX) using the above method. In general, a completely recrystallized material may have accumulated strain close to zero, whereas a material which has not recrystallized may have the accumulated strain equal to the reduction. The recrystallized fraction may be determined based on a ratio between the estimated accumulated strain of the object, and the physical reduction of the material.

$$RX = \frac{Estimated\ Accumated\ Strain}{reduction}$$

The estimated accumulated strain of the object may be attained using the linear regression between the measured birefringence $B$ and the accumulated strain as shown in Fig 8b.

It shall be noted that the estimation is based on the condition that when the object 2 is subjected to a rolling operation, the reduction in the thickness direction mainly result in an elongation in the length direction, with minor or even no expansion in the transverse direction.

Moreover, the present invention relates to a method for controlling a steel rolling process. The method comprises the step as shown in Fig. 9:

S19: performing *in-situ* measurements of accumulated strain and/or the recrystallized fraction of a steel object during the steel rolling process by use of the method according to any one of embodiments of the first aspect and/or the second aspect of the invention, and

S20: controlling the steel rolling process based on the accumulated strain/ and or the recrystallized fraction.

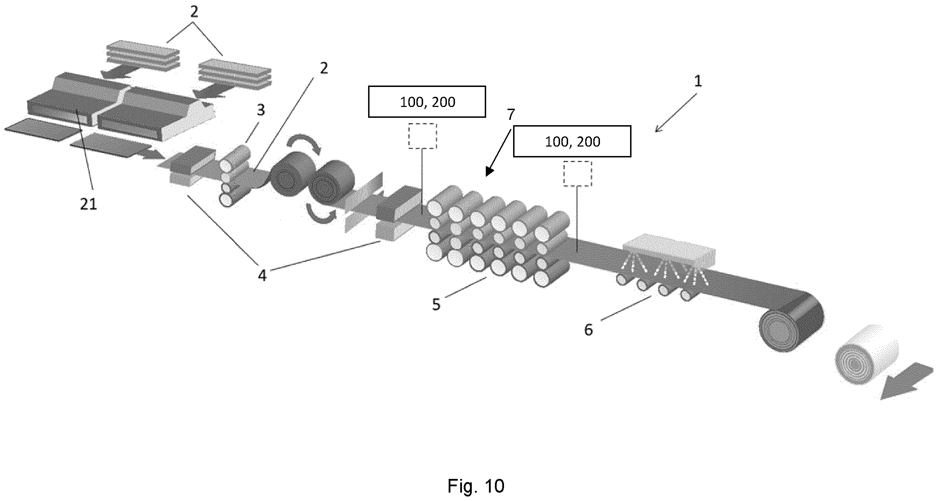

Fig. 10 shows a steel hot rolling mill 1 comprising an arrangement 100, such as Fig. 11 arrangement 100, having a LUS measurement equipment 200 according to the third aspect of the invention. The steel hot rolling mill 1 may for example be a hot strip mill. From the left-side of the figure, steel slabs 2 are heated in a slab furnace 21 to a specific temperature, such as to about 1250 °C. After withdrawal of the slabs from the furnace, the oxide layer on the surface is removed by scale breakers 4 (high-pressure water spray). In a next step, the steel slab 2 is entered into a roughing mill 3, where the thickness of the steel slab is reduced, for example from about 200 mm to 30 mm, and increases in length, becoming a steel transfer bar. Thereafter the steel transfer bar 2 is coiled. Thereafter the steel transfer bar 2 enters the finishing mill area 7, where it first passes another scale breaker 4 to remove new mill scale. After descaling, the steel transfer bar 2 is rolled in tandem stands. In the shown example there are six four-high rolling stands 5. The rolling stands 5 reduces the thickness of the steel transfer bar, such as to 1.8 to 16 mm. The rolling speed at the end of the hot rolling mill 1 may be as high as 15 m/s. Thereafter the thin steel strip 2 is cooled in a cooling section ROT (run out table) equipment 6 and coiled and/or cut into a specific length.

The hot rolling process may be controlled based on the estimated accumulated strain and/or on a determined recrystallized fraction of the object 2 during the hot rolling process. For example, a LUS measurement equipment 200 which is connected to a control unit 300 which comprises a computer program which performs the steps of an embodiment of the first and/or second aspects of the invention may be placed before and/or after the pair of rollers 5, as indicated in fig. 10, and/or in-between two adjacent pairs of rollers. The control may be feedback and/or feed forward control. For example, speed, roller pressure, temperature etc. may be controlled in order to reach a desired accumulated strain and/or recrystallized fraction of the finished steel strip.

Fig. 11 shows a schematic view of an arrangement 100 for measuring the accumulated strain and/or a recrystallized fraction of a steel object 2 in a steel rolling process, comprising:

- a LUS measurement equipment 200 comprising a generation laser 210, a detection laser 220 and a detector 230, and
- a control unit 300 configured to perform the steps of the method according to any one of embodiments of the first aspect and/or the second aspect of the invention.

For performing the method according to any one of the embodiments of the present invention, the control unit 300 may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In some examples, the laser beams of the generation laser and the detection laser are directed towards the same location on the surface of the object. "Same location" may herein mean that the laser beams are provided at a distance from each other on the surface which is 1 mm (millimetre) or less. In other words, the generation and the detection may preferably overlap on the surface. Alternatively, a direction of the laser beam of the generation laser and a direction of the laser beam of the detection laser are angularly separated relative each other.

In some examples, the generation laser and the detection laser may be configured to provide different laser beam wavelengths. For example, the detection laser may be configured to provide a larger laser beam wavelength than the laser beam wavelength provided by the generation laser. Just as a matter of example, the generation laser may be configured to provide a laser beam wavelength of 532 nm (nanometres), and the detection laser may be configured to provide a laser beam wavelength of 1064 nm.

In the shown example, the object 2 has a first surface 2a and a second surface opposite to the first surface 2a along a thickness direction. The generation laser 210 and the detection laser 200 may be configured to be provided on the same surface 2a. In some other examples, the generation laser 210 may be configured to be provided on the first surface 2a while the detection laser 200 may be provided on the second surface 2b, or vice versa.

The LUS measurement equipment 200 may further comprise one or more fixed and/or movable mirrors 240, lenses 250 and a protective screen with funnel 260, where all or most of the components are provided in a housing 270. The direction onto the surface of the steel strip 2 of the laser beam of the generation laser 210 and the detection laser 220 may be non co-axial, as shown in fig. 11 The laser beams are further emitted through an opening 280 of a wall 290.

It is to be understood that the present disclosure is not limited to the embodiments described above and illustrated in the drawings; rather, the skilled person will recognize that many changes and modifications may be made within the scope of the appended claims.

## Claims

1. A method for estimating an accumulated strain of an object (2) by means of a laser ultrasonic (LUS) measurement equipment (200) comprising a generation laser (210), a detection laser (220) and a detector (230), the method comprising:

   - providing (S1) a laser pulse onto a surface of the object by the generation laser such that a plurality of ultrasonic waves is created in the object,
   - detecting (S2) the plurality of ultrasonic wave-echoes by use of the detection laser and the detector, and therefrom obtaining a time-varying signal relating to an amplitude variation of the plurality of ultrasonic wave-echoes in a time domain,
   - estimating (S3) the accumulated strain of the object by use of the time-varying signal.

2. The method according to claim 1, further comprising:

   - from the time-varying signal, detecting (S4) at least one shear wave packetecho in the plurality of ultrasonic wave-echoes,
   - estimating (S5) the accumulated strain of the object by use of the at least one shear wave packet echo.

3. The method according to claim 2, wherein detecting the at least one shear wave echo comprises detecting (S6) whether the at least one shear wave packet echo is split into a first wave-echo having a first peak and a second wave-echo having a second peak, and when the first and second wave-echoes are detected,

   - estimating (S7) the accumulated strain of the object (2) by use of the first and second wave-echoes.

4. The method according to claim 3, further comprising:

   - detecting (S8) a temporal separation between the first peak of the first wave-echo and the second peak of the second wave-echo, and
   - estimating (S9) the accumulated strain of the object by use of the temporal separation.

5. The method according to claim 4, wherein the estimation is based on an assumption that a level of the accumulated strain is proportional to a degree of the temporal separation between the first peak and the second peak.

6. The method according to any one of claims 2-5, further comprising:

   - from the time-varying signal, detecting (S10) at least one longitudinal wave-echo in the plurality of ultrasonic wave-echoes,
   - estimating (S11) the accumulated strain of the object by use of the at least one shear wave packetecho and the at least one longitudinal wave-echo.

7. The method according to claim 6, wherein the object has a first extension along a normal direction (ND), a second extension along a length direction (LD) and a third extension along a transverse direction (TD), the normal direction, the length direction and the transverse direction (ND, LD, TD) being perpendicular to each other, and wherein the at least one shear wave is propagating in the normal direction (ND) of the object and have polarizations in the length direction (LD) and the transverse direction (TD), and the method further comprising

   - estimating (S12) the accumulated strain by use of the at least one shear wave having the polarizations in the length direction and the transverse direction.

8. The method according to claim 7, further comprising:

   - detecting (S13) at least one shear wave-echo having the polarization in the length direction (LD) and determining a first Poisson's ratio ($v_{LD}$) by use of the detected at least one shear wave-echo and the at least one longitudinal wave-echo,
   - detecting (S14) at least one shear wave-echo having the polarization in the transverse direction (TD) and determining a second Poisson's ratio ($v_{TD}$) by use of the detected at least one shear wave-echo and the at least one longitudinal wave-echo,
   - estimating (S15) the accumulated strain based on the first and second Poisson's ratios ($v_{LD}$), ($v_{TD}$).

9. The method according to claim 8, wherein the estimation is based on an assumption that a level of the accumulated strain is proportional to a difference between the first and the second Poisson's ratios ($v_{LD}$), ($v_{TD}$).

10. The method according to any one of the preceding claims, wherein the laser pulse is provided with a predetermined power level by the generation laser, such that the plurality of ultrasonic wave-echoes is created by the ultrasonic pulse.

11. The method according to any one of the preceding claims, wherein less than four echoes, from a first used echo to a last used echo, are used for estimating the accumulated strain.

12. The method according to any one of the preceding claims, wherein the object is a metallic object, preferably a steel alloy.

13. The method according to any one of the preceding claims, wherein laser beams of the generation laser and the detection laser are directed towards the same location on the surface of the object.

14. The method according to any one of the preceding claims, wherein the generation laser and the detection laser are configured to provide different laser beam wavelengths.

15. A method for determining a recrystallized fraction of an object (2) which has been subjected to a rolling operation, comprising:

   - estimating (S16) an accumulated strain of the object by use of the method according to any one of claims 1-14,
   - determining (S17) a rolling reduction of the object, and

- determining (S18) the recrystallized fraction based on the rolling reduction and the estimated accumulated strain.

16. A method for controlling a steel rolling process, the method comprising:

- performing (S19) *in-situ* measurements of an accumulated strain of a steel object during the steel rolling process by use of the method according to any one of claims 1-14, or alternatively, or alternatively, performing (S19) *in-situ* measurements of a recrystallized fraction a steel object during the steel rolling process by use of the method according to claim 15, and
- controlling (S20) the steel rolling process based on the accumulated strain and/or the recrystallized fraction.

17. An arrangement (100) for measuring an accumulated strain and/or a recrystallized fraction of an object (2), comprising:

- a laser ultrasonic (LUS) measurement equipment (200) comprising a generation laser (210), a detection laser (220) and a detector (230), and
- a control unit (300) configured to perform the steps of the method according to any one of claims 1-14 for measuring the accumulated strain, or alternatively, a control unit (300) configured to perform the steps of the method according to claim 15 for measuring the recrystallized fraction.

18. The arrangement according to claim 17, wherein laser beams of the generation laser and the detection laser are directed towards the same location on the surface of the object, and/or wherein a direction of the laser beam of the generation laser and a direction of the laser beam of the detection laser are angularly separated relative each other.

19. The arrangement according to any one of claims 17-18, wherein the generation laser and the detection laser are configured to provide different laser beam wavelengths.

20. A steel rolling mill (1) comprising the arrangement according to any one of claims 17-19.

21. A computer program comprising program code means for performing the steps of any of claims 1-15 when said program is run on the control unit according to claim 17.

22. A computer readable medium carrying a computer program comprising program code means for performing the steps of any of claim 1-15 when said program product is run on the control unit according to claim 17.

EP 4 707 793 A1

Fig. 1

Fig. 2

Fig. 3

EP 4 707 793 A1

Fig. 4

S

Fig. 5

S

Fig. 6

Fig. 7

Fig. 8a

EP 4 707 793 A1

Fig. 8b

Fig. 9

Fig. 10

Fig. 11

Europäisches
Patentamt

European
Patent Office

Office européen
des brevets

# EUROPEAN SEARCH REPORT

**Application Number**

EP 24 19 8336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOSEPH S HEYMAN ET AL: "AN INTERFEROMETRIC MEASUREMENT OF THE ACOUSTOELASTIC CONSTANT OF ROCK CORE SAMPLES", ULTRASONICS SYMPOSIUM,, 1 January 1983 (1983-01-01), pages 980-983, XP001330149, * the whole document * | 1-22 | INV. G01N29/04 G01N3/00 G01N29/11 G01N29/24 |
| A | JP H11 281632 A (NIPPON STEEL CORP) 15 October 1999 (1999-10-15) * abstract * * paragraphs [0010] - [0024] * | 1-22 | |
| A | WO 2008/057727 A2 (WISCONSIN ALUMNI RES FOUND [US]; VANDERBY RAY [US] ET AL.) 15 May 2008 (2008-05-15) * abstract * * paragraphs [0010] - [0045] * | 1,17,21, 22 | |

**TECHNICAL FIELDS SEARCHED (IPC)**

G01N

The present search report has been drawn up for all claims

| Place of search | Date of completion of the search | Examiner |
|---|---|---|
| Munich | 11 February 2025 | Uttenthaler, Erich |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 8336

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2025

| Patent document cited in search report | | Publication date | Patent family member(s) | | Publication date |
|---|---|---|---|---|---|
| JP H11281632 | A | 15-10-1999 | JP | 3895865 B2 | 22-03-2007 |
| | | | JP | H11281632 A | 15-10-1999 |
| WO 2008057727 | A2 | 15-05-2008 | EP | 2073713 A2 | 01-07-2009 |
| | | | JP | 2010506686 A | 04-03-2010 |
| | | | US | 2007089530 A1 | 26-04-2007 |
| | | | US | 2010228125 A1 | 09-09-2010 |
| | | | WO | 2008057727 A2 | 15-05-2008 |

EPO FORM P0459

For more details about this annex : see Official Journal of the European Patent Office, No. 12/82